# EUROPEAN PATENT SPECIFICATION

(11) **EP 0 382 835 B1**
(45) Date of publication and mention of the grant of the patent: **21.08.1996**
(21) Application number: 89909350.4
(22) Date of filing: 26.07.1989
(51) Int. Cl.: A23B 9/02, A23B 7/005, A23L 3/18, A23L 3/00

(54) **MEANS AND METHOD FOR STERILIZING SPICES AND LIKE SUBSTANCES**
VORRICHTUNG UND VERFAHREN ZUR STERILISIERUNG VON GEWÜRZEN UND DERGLEICHEN
MOYEN ET PROCEDE DE STERILISATION D'EPICES ET SUBSTANCES ANALOGUES

(30) Priority: 28.07.1988 US 225249
(43) Date of publication of application: 22.08.1990
(73) Proprietor: NEWLY WEDS FOODS, INC, Chicago, IL 60600 (US)
(72) Inventor: DUDEK, Daniel, H., Cockeysville, MD 21030 (US); ANGELL, Donald, W., Gerald, MO 63037 (US)
(74) Representative: Bucks, Teresa Anne
(86) International application number: US8903224
(87) International publication number: WO9000865

(56) References cited:
- EP-A- 0 269 257
- FR-A- 1 439 916
- FR-B- 2 387 607
- GB-A- 1 168 131
- US-A- 2 551 981
- US-A- 3 994 685
- US-A- 4 421 020
- US-A- 4 543 263
- US-A- 4 547 383
- US-A- 4 844 933

## Description

### Discussion of the Prior Art

There are many known devices for sterilizing food products including leafy herbs and spices but all of the known devices have certain limitations and shortcomings. For example, the known devices, for the most part, use chemical sterilizers or wet steam and if wet steam is used, it is used in a sterilizing environment that is relatively hot and has a fairly high pressure. Such apparatus produce some contamination of the product being sterilized and may adversely affect the taste and/or flavor of the product being sterilized. Also, when wet steam is used as the sterilizing medium, relatively high pressures are required and the high pressures are usually exhausted to atmosphere suddenly and in the presence of the product being sterilized, and this sudden relatively high pressure loss frequently damages the product and in some cases, causes the products to undergo puffing. The use of sterilizing chemicals and wet steam also produces some chemical reaction in the product being sterilized and this can adversely affect its taste and flavor. Furthermore, where chemicals are used as the sterilizing medium, there is some danger to the person operating the apparatus and it is not altogether clear whether or not chemical sterilizers contaminate the products in such a manner as to make them unsafe. Thus, there are definite disadvantages and limitations of known apparatus and methods for sterilizing food products and these are overcome by the present apparatus and method which produces little or no chemical or physical change in the product being sterilized and it is able to be operated in a continuous or in an intermittent mode to economically and efficiently sterilize large quantities of spice. The present apparatus also lends itself to being tailored to the characteristics of the product being sterilized which is not as true of known apparatus which are less flexible and less able to be tailored to each different product being sterilized.

### Present Construction and Method

According to the process of this invention, spices and leafy herbs are sterilized by establishing a closed chamber having a predetermined sterilizing temperature and pressure therein, characterized by superheated steam in the closed chamber. A bulk flavoring product selected from the group consisting essentially of spices and leafy herbs is introduced into the closed chamber via an inlet chamber without exposing the closed chamber to ambient atmosphere. The product is then conveyed in a layer on a support surface in the closed chamber to a discharge location while exposing the product to superheated steam in the closed chamber, such that the superheated steam sterilizes the product. The product is then transferred from the discharge location in the closed chamber to an outlet chamber without exposing the closed chamber to ambient atmosphere, and pressure is then relieved in the outlet chamber at a rate selected to avoid puffing of the product, without exposing the closed chamber to ambient atmosphere.

According to this invention, an apparatus for sterilizing spices and leafy herbs is provided which comprises a sealed sterilizing chamber having means for conveying a bulk flavoring product on a support surface, which extends between an inlet position and an outlet position. Means are provided for maintaining an environment of superheated steam in the sterilizing chamber under a pressure and at a temperature selected such that the superheated steam sterilizes the product. An inlet chamber is attached to the sterilizing chamber and aligned with the inlet position to deposit the product on the support surface at the inlet position, and an outlet chamber is attached to the sterilizing chamber and aligned with the outlet position to receive the product from the support surface at the outlet position. Each of these inlet and outlet chambers comprises a respective sealed chamber and means for alternately opening the respective sealed chamber to the sterilizing chamber and to a respective space outside the sterilizing chamber. Means are provided for reducing pressure in the outlet chamber at a sufficiently slow rate to ensure that the product in the outlet chamber is not puffed when the respective opening means opens the outlet chamber to the respective space.

The present invention relates to improved means and method for sterilizing food products and particularly spices such as leafy herbs and other like spices and spice-like substances. The embodiment described below includes an apparatus having a sealed sterilizing chamber with conveyer means located therein, means using superheated (dry) steam to establish a predetermined sterilizing environment in the sterilizing chamber, the sterilizing chamber having an inlet port with inlet means where products to be sterilized are introduced by falling onto the conveyer means and an outlet port into which sterilized products fall from the conveyer, both the inlet and outlet port including chamber means with associated inlet and outlet valve means which are periodically placed in communication with the sterilizing chamber and with ambient atmosphere and operate in a manner so as not to substantially alter the sterilizing environment in the sterilizing chamber when products are introduced into and removed therefrom. The present apparatus includes means for maintaining a predetermined sterilizing environment in the sterilizing chamber including an environment having a relatively low pressure within the range from 0.03 MN/m² to 0.2 MN/m² (5 to 30 pounds per square inch gauge (PSIG)), a temperature within a range from 100°C to 180°C (212°F to 350°F), the apparatus also includes means for introducing superheated steam at a temperature between 101.5°C and 205°C (215°F and 350°F) into the sterilizing chamber so that the environment maintained therein is able to sterilize products such as spice-like substances on the conveyor means without exposing the products to substantial amounts of moisture and therefore without increasing the moisture content of the products or spices being sterilized. The present apparatus can be operated continuously to sterilize products and it does so without subjecting the products or spices to sudden pressure changes of sufficient magnitude to produce physical changes or puffing of the products.

It is a principal object of the invention to provide improved means and method for sterilizing products such as leafy herbs and various spices and spice-like substances.

Another object is to establish and maintain a predetermined sterilizing environment into which leafy herbs and other spice-like substances to be sterilized can be introduced, conveyed and discharged without other-wise altering the physical or chemical characteristics thereof.

Another object is to use superheated (dry) steam in the sterilizing of leafy herbs and other spices and spice-like substances.

Another object is to reduce the amount of steam required to sterilize leafy herbs and other spices and spice-like substances.

Another object is to provide improved means for introducing and removing substances to be sterilized into and from a pressurized, heated sterilizing environment including an environment created in part by superheated steam.

Another object is to provide means to sterilize leafy herbs and other spices by means which produce minimal adverse effects on the herbs and spices.

Another object is to provide relatively simple and efficient means for sterilizing spices.

Another object is to sterilize spices without adversely affecting the taste and flavor of the spices.

Another object is to increase the rate at which food substances such as leafy herbs and spices can be sterilized.

Another object is to sterilize substances and especially food substances without the possibility of producing any contamination therein.

Another object is to teach the construction and operation of an improved sterilizing device which can be used to sterilize a wide variety of products including leafy herbs, various spices and certain other food products.

Another object is to provide means which that can be adjusted to predeterminately control the time and/or conditions required to sterilize different types of products.

Another object is to teach the construction of a sterilizing apparatus which can operate intermittently to receive, convey, and discharge substances being sterilized in a controlled environment on a continuous basis.

Another object is to make it possible to tailor the sterilizing environment and time required to sterilize different substances depending on the requirements of each substance being sterilized.

Another object is to teach the construction and operation of an apparatus for sterilizing certain food products with minimal adverse effect on the taste of the products being sterilized.

Another object is to increase the quality and natural purity of leafy herbs, spices and other food products and ingredients.

Another object is to sterilize spice-like products in a pressurized heated environment without subject the products to sudden pressure changes sufficient to physically damage or change the characteristics of the product.

Another object is to teach the construction and operation of a sterilizing apparatus that is safer to use than known apparatus because it operates at lower pressures and uses relatively dry superheated steam rather than steam with greater water content.

These and other objects and advantages of the present invention will become apparent after considering the following detailed specification in conjunction with the accompanying drawings.

### Description of the Drawings

Fig. 1 is a side elevational view of a sterilizing apparatus constructed according to the present invention;
Fig. 2 is a right end view of the sterilizing apparatus shown in Fig. 1;
Fig. 3 is a cross-sectional view taken on line 3-3 of Fig. 1; and
Fig 4 is a diagrammatical side elevational view that illustrates a typical order or sequence of operations that take place using the subject apparatus.

### Description of Preferred Embodiment

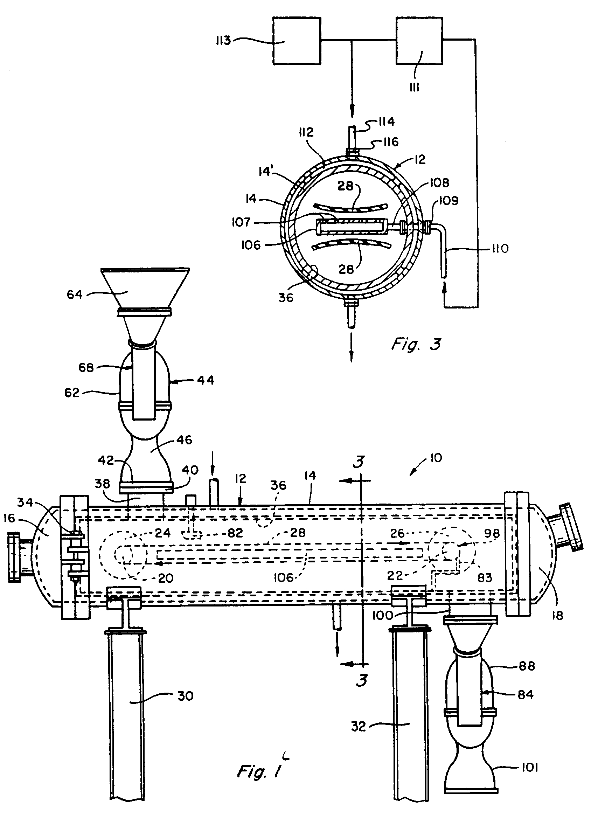

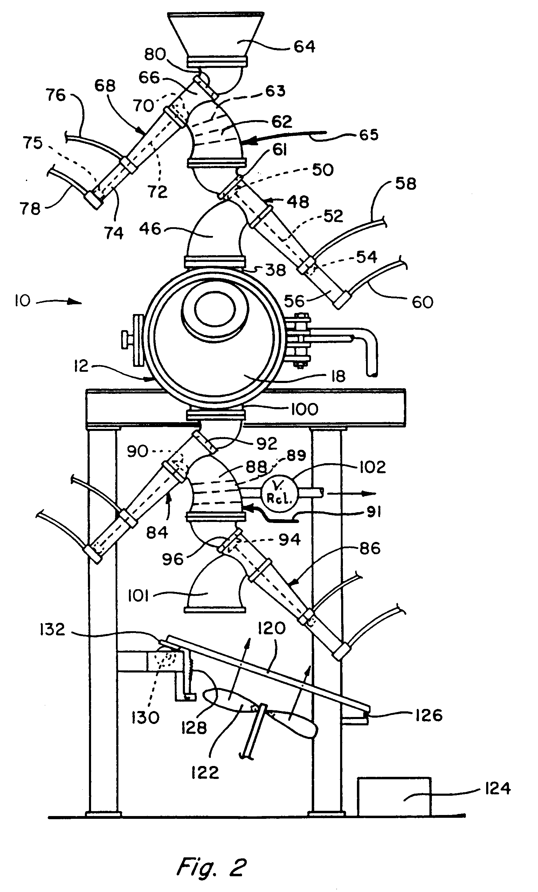

Referring to the drawings more particularly by reference numbers, number 10 in Figs. 1 and 2 identifies a preferred embodiment of a sterilizing apparatus constructed according to the teachings of the present invention. The apparatus 10 includes an elongated tubular jacketed housing 12 which is formed by a tubular member 14 or structure closed and sealed at both opposite ends by closure members 16 and 18 and suitable seals or gaskets. Mounted in the jacketed housing 12 are a pair of spaced parallel shafts 20 and 22 each having mounted on it a respective flanged belt support member 24 and 26. An endless flexible belt 28 is positioned extending around the flanged members 24 and 26 and around the shafts 20 and 22. The flanged members 24 and 26 are preferably constructed to give the belt 28 a trough shaped cross-section for reasons which will become apparent hereinafter. The housing structure 12 is supported in an an elevated position by spaced support members 30 and 32, and the end caps or closure members 16 and 18 may be connected to the housing 12 by hinges 34 so that they can be swung open and closed without being completely removed for access to the interior of the elongated housing 12 as required. The housing also is preferably jacketed with pipes and chambers to further insulate the interior. When the closure members 16 and 18 are in their closed and locked positions a sealed sterilizing chamber 36 is formed in the housing 12.

Referring again to Fig. 1, the belt 28 is shown as being movable in a clockwise direction, that is the upper reach of the belt moves from left to right. Attached to the upper surface of the housing 14 near the left end thereof and at a location above the left end portion of the upper belt reach is an inlet conduit 38 which has a flange 40 that sealably engages a flange 42 on the lower end of an input assembly 44. The input assembly 44 has a lower spout portion 46 which communicates with the inlet tube 38 and the upper end thereof is attached to a valve housing 48 which has a movable valve member 50 positioned therein. The movable valve 50 is attached to one end of an operating rod 52 which extends into and is attached at its opposite end to a piston 54 located in a cylinder housing 56. The cylinder housing 56 has hydraulic or pneumatic input tubes 58 and 60 which connect opposite ends thereof to a source of hydraulic or pneumatic pressure (not shown). When pressure is introduced into one or the other of the tubes 58 or 60 it causes the piston 54 and the connected rod 52 and valve 50 to move either to its open or to its closed position. The closed position of the valve is shown in Fig. 2 with the valve 50 engaging valve seat 61. The open position is when the valve 50 is spaced from the valve seat 61. In the closed position of the valve 50 the environment in the chamber 36 communicates with the chamber formed in the spout portion 46, terminating where the valve 50 engages with the valve seat 61. This means that there is communication between the chamber 36 and the space in the spout 46 and both will therefore have the same environment. It is expected that the volume in the spout 46 will be much smaller than the volume in the chamber 36 for its effect on the overall environment is negligible.

Another chamber is formed in the housing member 62 and extends from the valve seat 61 upwardly for communication with an inlet funnel 64 through another tubular valve housing 66 of valve assembly 68. The valve assembly 68 includes a movable valve member 70 attached to a rod 72 that extends into cylinder housing 74 where it is attached to piston 75. The housing 74 also has hydraulic or pneumatic connections 76 and 78 that communicate respectively with the housing 74 on opposite sides of the piston 75. The valve 70 is shown in Fig. 2 in its open position which is the position in which it is withdrawn downwardly from engagement with valve seat 80. In this position a quantity of a substance to be sterilized, such as a quantity of a leafy herb substance or the like, can be poured into the funnel 64 where it will pass down through the open valve seat 80 and into the chamber formed by the housing portion 62. A predetermined amount of such substance to be sterilized is introduced into the housing 62 in this manner, and once the desired charge of substance is in the housing 62, the valve 70 will be moved from its open to its closed position engaging the valve seat 80 and sealing the housing 62 closed. This is accomplished by introducing hydraulic or pneumatic pressure into the line 78 to move the piston 75, the rod 72 and the attached valve 70 in the upward direction as shown. When this is done the chamber formed in the housing 62 is blocked at both ends by the valves 70 and 50. Thereafter, at some later time the lower valve 50 will be opened by introducing fluid or pneumatic pressure into the conduit 58, moving the piston 54 in a downward and rightward direction as shown. As soon as the valve 50 is open the charge of product to be sterilized which is in the housing 62 will fall through the opening formed by the valve seat 61 and will land on the belt 28 where it will thereafter be carried in a rightward direction as shown in Fig. 1. The valves 70 and 50 and their associated valve sets serve to form a chamber lock between the inlet funnel 64 and the chamber 36 so that substances to be sterilized can be introduced without substantially changing the environment in the chamber 36. This is true in part because the chamber 36 is preferably substantially larger than the chamber in the housing 62. This means that the sterilizing environment in the chamber 36 can be maintained at or near some desired sterilizing condition with minimal effort and with minimal introduction of added superheated dry steam and pressure as will be explained. A rake or plow 82 or other type device is provided in the chamber 36 to spread the product out on the belt 28 in a layer having a thickness of 25.4-50.8 mm (1-2 inches) and a doctor blade 83 is shown mounted below the belt 28 to scrape the belt clean as the product is discharged therefrom.

A similar chamber lock is provided at the outlet end of the tubular jacketed housing 12 where a product that has been sterilized is discharged after having spent a desired time in the chamber 36. The time required for a particular substance to remain in the chamber 36 will depend upon the characteristics of the product itself and the characteristics of the environment maintained in the chamber. A table listing typical ranges of product discharge temperatures and pressures for various substances to be sterilized is set forth below. It should be recognized however that in all cases the pressures used in the chamber 36 are relatively low compared to pressures used in sterilizers heretofore and even these relatively low sterilizing pressures will be further reduced so that when a sterilized product present in the outlet lock chamber is suddenly released for exposure to ambient atmosphere, the pressure change that occurs will be relatively small and clearly not so great as to damage the product such as by causing puffing or some other undesirable condition. This is very important to prevent damage and loss of flavor in many products including products such as leafy herbs and spices.

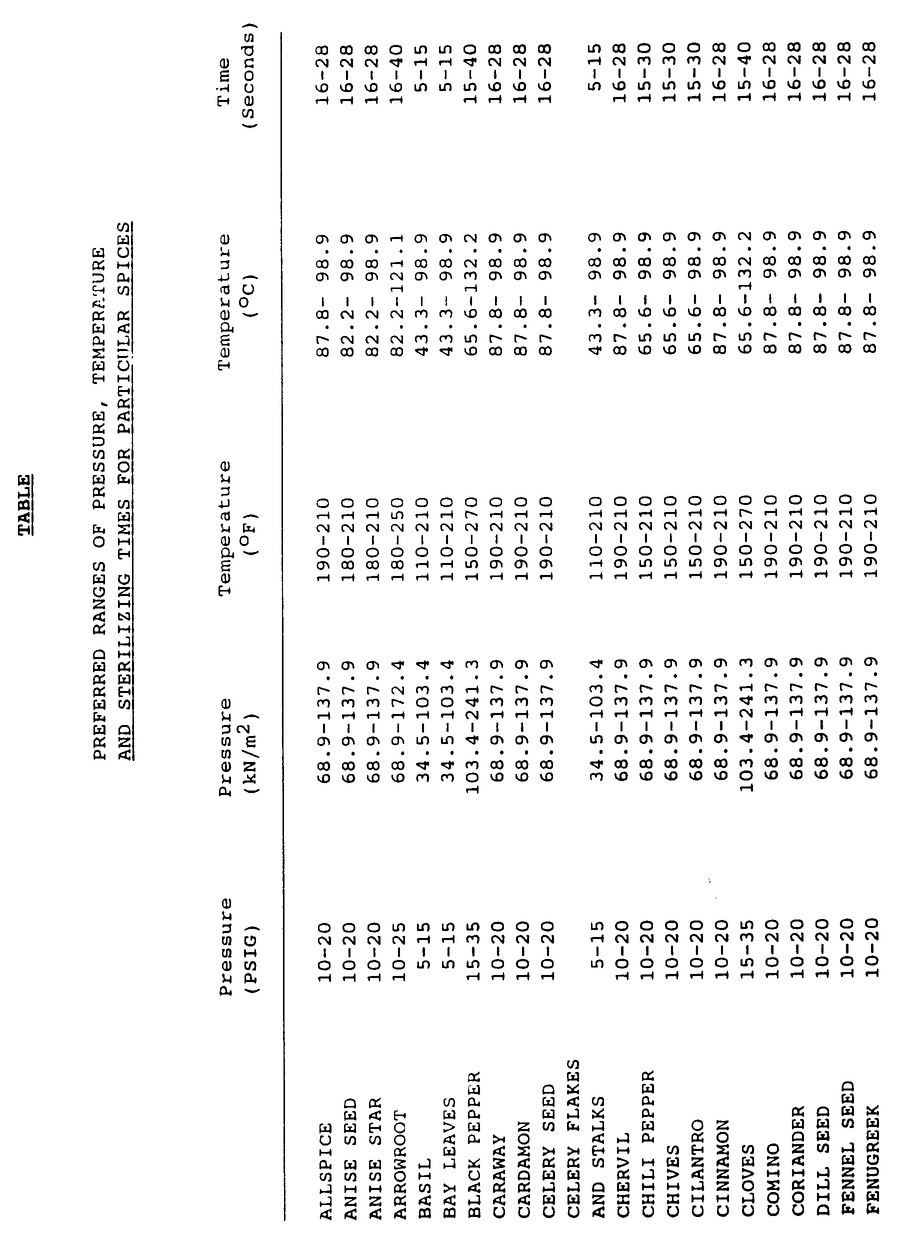

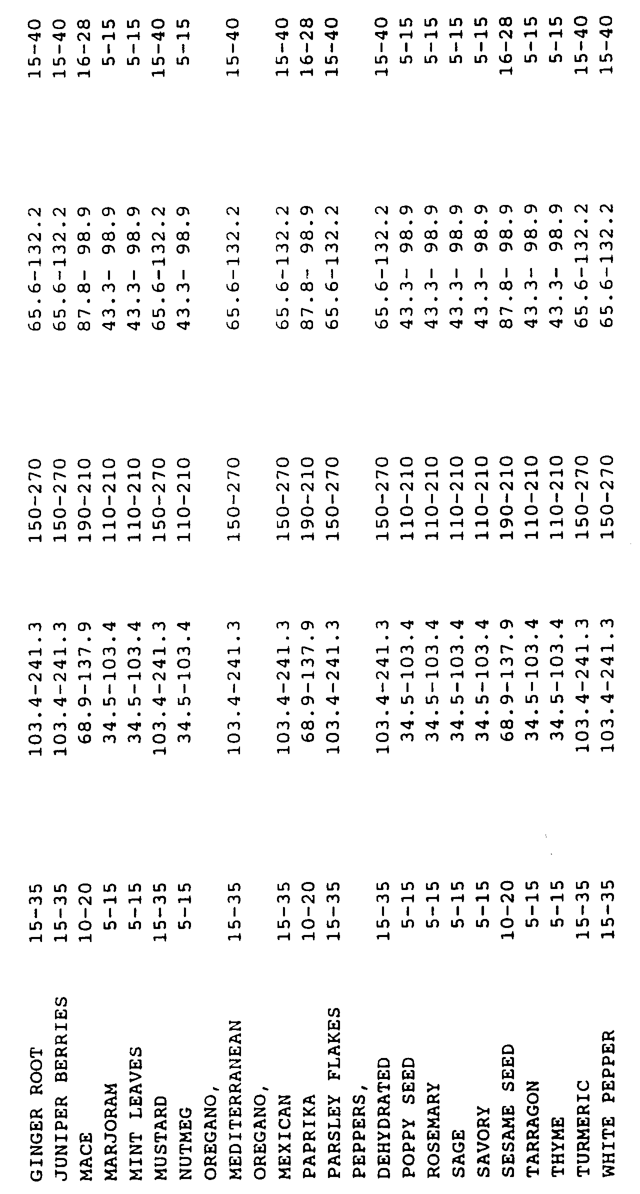

Referring to Fig. 2, the outlet means includes a pair of hydraulic or pneumatic valve assemblies 84 and 86 which are similar to the assemblies 48 and 68 described above, and they operate similarly to establish a lock chamber condition in a housing structure 88 similar to the lock chamber formed in the inlet housing structure 62. The upper valve assembly 84 includes a movable valve member 90 which sealably cooperates with an upper valve seat member 92 to form a seal there between when closed, and the lower valve assembly 86 includes a valve member 94 which sealably cooperates with a valve seat member 96 to form a seal therebetween when closed.

When a quantity of substance falls on the belt 28, it is retained in the chamber 36 for a period of time sufficient to sterilize it, which time is controlled at least in part by the speed of movement of the belt 28 from where the substance is deposited by the inlet assembly 44 to where the substance falls off the right end 98 thereof into outlet chute or tube 100 and into the lock chamber formed in the housing structure 88. This occurs when the upper valve 90 is in its open position as shown in Fig. 2. After a predetermined quantity of the substance has fallen into the housing 88, the valve 90 will be actuated to move to its closed position sealably engaged with the valve seat 92 to maintain a sealed condition in the sterilizing chamber 36. At this instant of time the environment in the sterilizing chamber 36 and in the housing 88 will be the same or very close to each other. Thereafter at some predetermined later time the lower valve 94 will be operated to move from its closed to its open position allowing the now sterilized material contained in the housing 88 to fall out through an outlet structure or tube 101 into a suitable cooler means or bin as will be described which is positioned to receive same. It is anticipated as indicated that with the present construction because of the use of superheated steam instead of wet steam, much lower pressures will be required in the sterilizing process than has been true in the past but even so, the discharged product may be relatively hot, and need to be cooled. The reduced pressure differential, however, means that the sterilized substances discharged into the housing 88 will undergo relatively little sudden pressure change as stated when the valve 94 opens. This is very important because the relatively small pressure change that occurs will not be sufficient to cause the sterilized products to undergo physical or chemical changes such as puffing or the like. Also the fact that the present apparatus and process uses dry as opposed to wet steam is important because it means that the substances being sterilized will pick up relatively little, if any, moisture from the sterilizing environment, a highly desirable condition from the standpoint of maintaining natural taste and flavor.

As clearly shown in Fig. 2, a relief valve 102, which may be in the form of adjustable needle valve, is mounted on the housing 88 and is adjusted to continuously relieve the pressure therein from the sterilizing pressure down to 0.03MN/m² (5 PSIG) by the time the valve 94 opens to discharge the contents thereof. This is done to further reduce the pressure differential when the product is discharged and prevent damage to the product by a sudden large pressure change. This is extremely important to the improved operation of the present device.

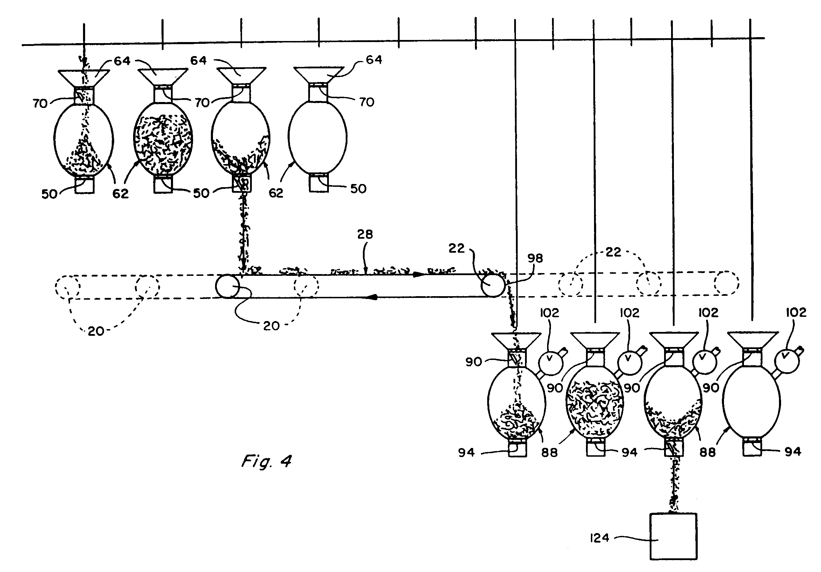

The main sterilizing housing 12 is shown in Fig. 3 containing a substantially enclosed structure 106 which is shown positioned centrally between the upper and lower reaches of the belt 28. The structure 106 has perforations or orifices 107 distributed over the surfaces and is connected by a conduit 108 and a suitable fitting 109 mounted in the walls of the jacketed housing 12, to another conduit 110 which has its opposite end connected to a steam super-heater 111 which receives steam from a device such as from boiler 113. The source of superheated steam required to maintain the sterilizing environment in the chamber 36 can be relatively small since with the present structure it is only necessary to maintain the environment in the chamber 35 and not to re-establish the sterilizing environment each time a quantity of the product being sterilized enters or is discharged therefrom. This is made possible because of the operation of the look chambers described above. The orifices 107 in the enclosed structure 106 are provided to relatively uniformly distribute the superheated steam fed into the structure 106 into the chamber 36. The housing 12, as shown in Fig. 3, is a jacketed housing formed by spaced wall portions 14 and 14' having a closed jacket chamber 112 therebetween which receives jacket steam directly from the boiler 113 through tube 114 and fitting 116. The jacket steam typically may be in a range between 93.3°C to 99°C (200°F to 210°F) and at a pressure in the range from 0.27MN/m² to 0.47MN/m² (40 to 70 PSIG). The superheated dry steam fed to the sterilizing chamber 36, on the other hand, will typically be in a range closer to 149°C (300°F) and at a lower pressure than the jacket steam pressure, as desired.

The drive means for the belt 28 can be constructed to be internal or external of the jacketed housing 12, as desired. If the drive means are located externally, it will be necessary to provide a sealed bearing structure mounted in the double wall jacket structure of the jacketed housing 12 through which the drive shaft such as the shaft member 20 (or 22) extends. The speed at which the belt 28 moves, which may be continuous or intermittent, will depend upon the environment maintained in the chamber 36, the length of the belt 28 and the sterilizing requirements of the particular product, all of which can be varied as required.

Referring to Fig. 4, there is shown a sequence of operations of the input lock chamber 62 and the output lock chamber 88. The term lock chamber as used herein refers to a chamber that can be sealed closed or opened at one or both ends and therefore can communicate with ambient temperature, or with the sterilizing chamber 36 or with neither. Four different conditions for the inlet chamber 62 and four different conditions for the outlet chamber 88 are shown in Fig. 4. The first condition of the inlet chamber 62 is the condition wherein the inlet valve 70 is open and a product or substance to be sterilized can fall through past the valve 70 into the chamber 62. The outlet valve 50 is closed in this situation so that the chamber 62 is in communication with ambient atmosphere but not with the sterilizing chamber 36. Subsequently, the inlet valve 70 will close as shown in the second position so that both the inlet and outlet valves 70 and 50 are closed at the same time. Still later as shown in the third position, the outlet valve 50 for the inlet chamber 62 is open so that the quantity of product that is contained in the chamber 62 can fall through the outlet and into the sterilizing chamber 36 where it lands on the upper reach of the belt 28 near the left end thereof. While the product is falling, the belt 28 can be in a stationary or a moving condition as desired. After the charge of product in the chamber 62 has been completely dispensed, the lower valve 50 will again be closed, again sealing the chamber 62 and isolating it from the sterilizing chamber 36 and the process will be repeated for the next charge. It can, therefore, be seen from what has been said that during operation the sterilizing chamber 36 is never exposed to ambient condition and therefore never completely loses it sterilizing environment. However, when the valve 50 opens as shown in the third position, the ambient temperature trapped in the chamber 62 will communicate with the temperature in the sterilizing chamber 36 and, to some small extent, will dilute the sterilizing environment which means that some additional superheated steam will need to be introduced into the sterilizing chamber from time to time to maintain the desired sterilizing environment. Obviously, the amount of additional steam that needs to be introduced due to this dilution will be minimal.

In the lower portion of Fig 4, the operation of the outlet lock chamber 88 is shown in its four operating positions. In the first position, the upper valve 90 is open and the lower valve 94 is closed so that the sterilizing chamber 36 communicates with the lock chamber 88. As the belt 28 moves, some of the product being carried thereby will move over the right end 98 of the belt 28 and fall into the sealed chamber 88 past the upper valve 90. This will occur until the desired amount of product is in the chamber 88 whereupon the valve 90 will move to its closed position as shown in the second position and the lock chamber 88 will then be sealed closed at both opposite ends and the sterilizing chamber 36 will also be sealed. However, and importantly, at all times the relief valve 102 will be open to some extent to relieve the pressure to atmosphere. At some later time, the outlet valve 94 will open while the upper valve 90 remains closed and when this happens, the charge of product in the chamber 88 will fall out the bottom of the lock chamber 88 past the valve 94 onto a device such as a tilted screen device 120 with an upwardly facing fan 122 positioned therebelow as shown. The air blown by the fan 122 will pass through the screen 120 and through product positioned thereon to cool and, if necessary, dry the product which thereafter will fall off the end of the screen 120 onto a container 124 for further processing or packaging. The product as it leaves the chamber 88 will undergo only a slight pressure change due to the action of the relief valve 102 and no damage will be caused to the product as it falls onto the screen 120. When this operation has been completed, the bottom valve 94 will again close and the process will be repeated a step at a time. The screen 120 is shown pivotal about one end at 126 and the opposite end is urged down by spring 128. The screen 120 is shown supported on a cam 130 which cooperates with follower 132 so that when the cam 130 is rotated, it vibrates the screen to aid in moving the product therealong.

In the preferred form of the present construction, the openings and closings of the valves 70, 50 and 90 and 94 will be staggered so that the sterilizing chamber 36 will never be exposed to both of the lock chambers 62 and 88 at the same time. This means that the sterilizing chamber will never be diluted at any one time by more than the volume of one of the lock chambers 62 or 88. This is desirable since it means that less dilution of the sterilizing chamber will occur and therefore less superheated steam will be required to be introduced into the sterilizing chamber 36 to maintain the sterilizing environment.

One of the important features of the present construction therefore is that it requires less energy to maintain the sterilizing environment and the sterilizing environment is also produced using superheated or dry steam as distinguished from wet steam. The use of superheated steam is greatly preferred since superheated steam, being dry steam, does not adversely affect the moisture content of the food product or spice being sterilized nearly as much and therefore, it has relatively little or no effect on the taste of the product being sterilized. Also, with the present construction, relatively low sterilizing pressures can be used in the sterilizing chamber 36 typically in the range from 0.03 MN/m² to 0.2 MN/m² (5 PSIG to 30 PSIG), so that there is much less of a pressure differential between the pressure inside the sterilizing chamber 36 and the pressure of ambient atmosphere and even this lower pressure is further reduced in the outlet lock chamber 82 by action of the relief valve 102 before the product is discharged. This is important because it means that when the product is discharged from the sterilizing chamber into the lock chamber 88 and thereafter the lock chamber is opened to atmospheric pressure, the product undergoes relatively small and gradual pressure changes and hence, the product is not as likely to be damaged due to puffing or the like as compared to known sterilizing apparatus that use much higher sterilizing pressures and saturated or wet steam. As stated, all known prior art devices use much higher sterilizing pressures and temperatures and no known apparatus uses dry steam as distinguished from wet steam in the sterilizing of products such as leafy herbs and spices. The present apparatus therefore has marked advantages over prior art constructions and the present apparatus is able to sterilize spices and like products with much less damage to the product, with much less loss of flavor and without substantial physical change.

The sterilizing devices and methods described above can be modified considerably if desired. For example, the endless belt 28 forms a support surface for the spice being sterilized, and the belt moves to convey the spice. Alternately, the support surface can be fixed and the spice can be moved along the support surface, as for example, if the support surface is tilted and vibrated. Also, various steps can be taken to reduce condensation on the spice. The housing structures 62,88 can be heated (for example, with an electrical heater 63,89). Furthermore, pressurized heated air can be introduced into the housing structures 62,88 via inlets 65,91 to heat and pressurize the spice before it is dropped onto the belt 28 and to assist in ejecting the spice from the housing structure 88.

Additionally, a separate super-heater is not always needed, and in some cases it will be preferable to create superheated steam by allowing saturated, higher pressure steam to expand, thereby creating superheated steam without a super-heater. It has been found preferable in some applications to arrange the temperature of steam in the jacket chamber 112 to be higher than the temperature at which superheated steam is introduced into the sterilizing chamber 36 by 5.6-11.1°C (10-20°F.
For example, the jacket chamber 112 can be heated with steam at 158.3°C (317°F) and superheated steam at a temperature of 151.7°C (305°F) and a pressure of 0.14 MN/m² (20 PSIG) can be introduced into the sterilizing chamber 36. When this is done, the walls of the sterilizing chamber 36 act further to super-heat the steam in the sterilizing chamber 36.

Thus, there has been shown and described novel means and method of sterilizing substances such as food products including leafy herbs and spices which fulfills all of the objects and advantages sought therefor.

## Claims

1. A process for sterilizing spices and leafy herbs comprising:
establishing a closed chamber having a predetermined sterilizing temperature and pressure therein characterized by superheated steam in the closed chamber;
introducing a bulk flavoring product selected from the group consisting essentially of spices and leafy herbs into the closed chamber via an inlet chamber without exposing the closed chamber to ambient atmosphere;
conveying the product in a layer on a support surface in the closed chamber to a discharge location while exposing the product to superheated steam in the closed chamber such that the superheated steam sterilizes the product;
transferring the product from the discharge location in the closed chamber to an outlet chamber without exposing the closed chamber to ambient atmosphere; and
relieving pressure in the outlet chamber at a rate selected to avoid puffing of the product without exposing the closed chamber to ambient atmosphere.

2. The method of Claim 1 wherein the conveying step comprises the step of conveying the product on an endless belt to the discharge location.

3. The method of Claim 1 wherein the conveying step conveys the product without agitation.

4. The method of Claim 1 wherein the establishing step comprises the step of introducing superheated steam at a temperature in the range of 100°C to 180°C (215°F to 350°F) and a pressure in the range of 0.03MN/m² to 0.2MN/m² (5 PSIG to 30 PSIG) into the closed chamber.

5. The method of Claim 1 further comprising the step of heating at least an exterior portion of the closed chamber to reduce condensation in the closed chamber.

6. The method of Claim 5 wherein the heating step heats the exterior portion of the chamber to a temperature greater than the temperatures of the superheated steam introduced into the chamber in the introducing step.

7. The method of Claim 5 further comprising the step of heating the inlet and outlet chambers to reduce condensation on the product.

8. The method of Claim 2 wherein the conveying step conveys the product on the belt in a layer having a thickness less than 50.8mm (2 inches).

9. The method of Claim 1 further comprising the step of pressurizing the product in the inlet chamber with a heated gas in order to reduce condensation on to product in the closed chamber.

10. The method of Claim 1 further comprising the step of introducing a heated gas into the outlet chamber after the pressure relieving step to eject the product from the outlet chamber.

11. An apparatus for sterilizing spices and leafy herbs comprising:
a sealed sterilizing chamber, said chamber having means for conveying a bulk flavoring product in a layer on a support surface which extends between an inlet position and an outlet position;
means for maintaining an environment of superheated steam under a pressure and at a temperature in the sterilizing chamber selected such that the superheated steam sterilizes the product;
an inlet chamber attached to the sterilizing chamber and aligned with the inlet position to deposit the product on the support surface at the inlet position;
an outlet chamber attached to the sterilizing chamber and aligned with the outlet position to receive the product from the support surface at the outlet position;
each of said inlet and outlet chambers comprising a respective sealed chamber and means for alternately opening the respective sealed chamber to the sterilizing chamber and to a respective space outside the sterilizing chamber; and
means for reducing pressure in the outlet chamber at a sufficiently slow rate to ensure that the product in the outlet chamber is not puffed when the respective opening means opens the outlet chamber to the respective space.

12. The apparatus of Claim 11 wherein the support surface comprises an endless belt and wherein the conveying means comprises means for moving the belt to convey the product from the inlet position to the outlet position.

13. The apparatus of Claim 12 wherein the belt is arranged to carry the product substantially without agitation.

14. The apparatus of Claim 11 wherein each opening means comprises at least one slide gate valve.

15. The apparatus of Claim 14 wherein each opening means comprises two slide gate valves.

16. The apparatus of Claim 11 wherein the pressure reducing means comprises a needle valve.

17. The apparatus of Claim 11 wherein the conveying means comprises means for spreading the product on the surface to a layer having a thickness less than 50.8mm (2 inches).

18. The apparatus of Claim 11 wherein the environment maintaining means introduces the steam at a temperature in the range of 100°C to 180°C (215°F to 350°F).

19. The apparatus of Claim 18 wherein the environment maintaining means introduces the steam at a pressure in the range of 0.03MN/m² to 0.2MN/m² (5 PSIG to 30 PSIG).

20. The apparatus of Claim 11 further comprising means for heating at least an exterior portion of the sterilizing chamber to reduce condensation.

21. The apparatus of Claim 20 wherein the heating means heats the exterior portion of the sterilizing chamber to a temperature greater than the temperature at which the superheated steam is introduced into the sterilizing chamber.

22. The apparatus of Claim 11 further comprising means for heating the inlet and outlet chambers to reduce condensation on the product.

23. The apparatus of Claim 11 further comprising means for pressurizing the inlet chambers with a heated gas to reduce condensation on the product.

24. The apparatus of Claim 11 further comprising means for introducing a heated gas into the outlet chamber to eject the product from the outlet chamber.

25. An apparatus according to Claim 11 for sterilizing fungible food products comprising a sealed housing member having a sterilizing chamber therein, an endless belt with spaced upper and lower belt reaches mounted in the sterilizing chamber and extending around spaced support members, means for moving the belt, inlet means including means forming a lock chamber attached to the housing at a location above the upper belt reach adjacent to one end thereof, outlet means including means forming a lock chamber attached to the housing at a location below the opposite end of the upper belt reach in position to receive products that fall off the belt end, each of said lock chambers having first valve means operable to control communication between the respective lock chamber and the sterilizing chamber and second valve means operable to control communication between the respective lock chambers and ambient atmosphere, means to control actuations of the first and second valve means so that the sterilizing chamber is never exposed to ambient atmosphere during operation of the sterilizing apparatus, and means associated with the outlet lock chamber for controllably relieving the pressure therein toward atmospheric pressure.

26. The apparatus defined in Claim 25 wherein the means associated with the outlet lock chamber for relieving the pressure therein includes a needle valve.

27. The apparatus defined in Claim 25 including means to maintain a predetermined sterilizing temperature in the sterilizing chamber in the range from 100°C to 180°C (212°F to 350°F).

28. The apparatus defined in Claim 25 including means to maintain a predetermined pressure in the sterilizing chamber in a range from 0.03MN/m² to 0.2MN/m² (5 PSIG to 30 PSIG).

29. The apparatus defined in Claim 25 wherein the means for relieving the pressure in the outlet lock chamber relieves the pressure therein to 0.03MN/m² (5 PSIG) before the second valve means associated therewith operates to establish communication between the second lock chamber and atmosphere.

30. The apparatus defined in Claim 25 wherein the food product is a leafy herb or spice.

31. The apparatus defined in Claim 25 including means in the sterilizing chamber for maintaining the upper reach of the endless belt in a trough-shaped condition.

32. The apparatus defined in Claim 25 including means in the sterilizing chamber for relatively uniformly distributing the product being sterilized on the upper reach of the belt.

33. The method of Claim 1 wherein the maintaining and transferring steps are timed to cause the bulk flavoring product to remain exposed to superheated steam in the closed chamber for at least 5 seconds and not more than 40 seconds.

34. The method of Claim 1 wherein the predetermined steriziling temperature and pressure established in the closed chamber ensure that the bulk product is sterilized in the closed chamber without any substantial increase in moisture content.

35. The method of Claim 6 wherein the heating step heats the exterior portion of the chamber to a temperature 5.6-11.1°C (10-20°F) greater than the temperature of the superheated steam introduced into the chamber in the heating step.

36. The method of Claim 1 wherein the maintaining step maintains the product in a layer having a thickness less than 50.8mm (two inches).

37. The method of Claim 1 wherein the bulk flavoring product consists of comino.

38. The method of Claim 1 wherein the bulk flavoring product consists of fennel seed.

39. The method of Claim 1 wherein the bulk flavoring product consists of allspice.

40. The method of Claim 1 wherein the bulk flavoring product consists of anise.

41. The method of Claim 1 wherein the bulk flavoring product consists of black pepper.

42. The method of Claim 1 wherein the bulk flavoring product consists of cinnamon.

43. The method of Claim 1 wherein the bulk flavoring product consists of tumeric.

44. The method of Claim 1 wherein the bulk flavoring product consists of white pepper.

45. The method of Claim 1 wherein the maintaining step maintains the product in a layer having a thickness in the range of 25.4 to 50.8mm (1-2 inches) on the support surface.

## Patentansprüche

1. Verfahren zum Sterilisieren von Gewürzen und blättrigen Kräutern, das umfaßt:
Bereitstellen einer geschlossenen Kammer mit vorgegebener Sterilisiertemperatur und -druck darin, **gekennzeichnet durch** überhitzten Dampf in der geschlossenen Kammer;
Einleiten eines losen Würzerzeugnisses, das aus der Gruppe ausgewählt wird, die im wesentlichen aus Gewürzen und blättrigen Kräutern besteht, in die geschlossene Kammer über eine Einlaßkammer, ohne die geschlossene Kammer der Umgebungsatmosphäre auszusetzen;
Transportieren des Erzeugnisses in einer Schicht auf einer Auflagefläche in der geschlossenen Kammer zu einer Austrittsstelle, wobei das Erzeugnis dem überhitzten Dampf in der geschlossenen Kammer ausgesetzt wird, so daß der überhitzte Dampf das Erzeugnis sterilisiert;
Überführen des Erzeugnisses von der Austrittsstelle in der geschlossenen Kammer zu einer Auslaßkammer, ohne die geschlossene Kammer der Umgebungsatmosphäre auszusetzen; und
Ablassen des Drucks in der Auslaßkammer mit einer Geschwindigkeit, durch die Aufblähen des Erzeugnisses vermieden wird, ohne die geschlossene Kammer der Umgebungsatmosphäre auszusetzen.

2. Verfahren nach Anspruch 1, wobei der Transportschritt den Schritt des Transportierens des Erzeugnisses auf einem Endlosband zu der Austrittsstelle umfaßt.

3. Verfahren nach Anspruch 1, wobei das Erzeugnis in dem Transportschritt ohne Bewegung transportiert wird.

4. Verfahren nach Anspruch 1, wobei der Bereitstellungsschritt den Schritt des Einleitens überhitzten Dampfes mit einer Temperatur im Bereich von 100°C bis 180°C (215° F bis 350°F) und einem Druck im Bereich von 0,3MN/m² bis 0,2MN/m² (5 PSIG bis 30 PSIG) in die geschlossene Kammer umfaßt.

5. Verfahren nach Anspruch 1, das des weiteren den Schritt des Erwärmens wenigstens eines äußeren Abschnitts der geschlossenen Kammer umfaßt, um Kondensation in der geschlossenen Kammer zu verringern.

6. Verfahren nach Anspruch 5, wobei in dem Erwärmungsschritt der äußere Abschnitt der Kammer auf eine Temperatur erwärmt wird, die über den Temperaturen des überhitzten Dampfes liegt, der in dem Einleitschritt in die Kammer eingeleitet wird.

7. Verfahren nach Anspruch 5, das des weiteren den Schritt des Erwärmens der Einlaß- und der Auslaßkammer umfaßt, um Kondensation an dem Erzeugnis zu verringern.

8. Verfahren nach Anspruch 2, wobei in dem Transportschritt das Erzeugnis auf dem Band in einer Schicht mit einer Dicke von weniger als 50,8 mm (2 Inch) transportiert wird.

9. Verfahren nach Anspruch 1, das des weiteren den Schritt des Unterdrucksetzens des Erzeugnisses in der Einlaßkammer mit einem erwärmten Gas umfaßt, um Kondensation an dem Erzeugnis in der geschlossenen Kammer zu verringern.

10. Verfahren nach Anspruch 1, das des weiteren den Schritt des Einleitens eines erwärmten Gases in die Auslaßkammer nach dem Druckablaßschritt umfaßt, um das Erzeugnis aus der Auslaßkammer auszustoßen.

11. Vorrichtung zum Sterilisieren von Gewürzen und blättrigen Kräutern, die umfaßt:
eine abgeschlossene Sterilisierkammer, wobei die Kammer über eine Einrichtung zum Transportieren eines losen Würzerzeugnisses in einer Schicht auf einer Auflagefläche umfaßt, die sich zwischen einer Einlaßposition und einer Auslaßposition erstreckt;
eine Einrichtung zum Aufrechterhalten einer Umgebung aus überhitztem Dampf unter einem Druck und mit einer Temperatur in der Sterilisierkammer, die so ausgewählt ist, daß das Erzeugnis durch den überhitzten Dampf sterilisiert wird;
eine Einlaßkammer, die an der Sterilisierkammer angeordnet und auf die Einlaßposition ausgerichtet ist, um das Erzeugnis an der Einlaßposition auf die Auflagefläche aufzubringen;
eine Auslaßkammer, die an der Sterilisierkammer angeordnet und auf die Auslaßposition ausgerichtet ist, um das Erzeugnis an der Auslaßposition von der Auflagefläche aufzunehmen;
wobei die Einlaß- und die Auslaßkammer jeweils eine entsprechende abgeschlossene Kammer und eine Einrichtung zum abwechselnden Öffnen der entsprechenden abgeschlossenen Kammer zu der Sterilisierkammer hin und zu einem entsprechenden Raum außerhalb der Sterilisierkammer hin umfassen; und
eine Einrichtung zum Verringern des Drucks in der Auslaßkammer mit einer Geschwindigkeit, die langsam genug ist, um zu gewährleisten, daß das Erzeugnis in der Auslaßkammer nicht aufgebläht wird, wenn die entsprechende Öffnungseinrichtung die Auslaßkammer zu dem entsprechenden Raum hin öffnet.

12. Vorrichtung nach Anspruch 1, wobei die Auflagefläche ein Endlosband umfaßt, und wobei die Transporteinrichtung eine Einrichtung zum Bewegen des Bandes umfaßt, um das Erzeugnis von der Einlaßposition zu der Auslaßposition zu transportieren.

13. Vorrichtung nach Anspruch 12, wobei das Band das Erzeugnis im wesentlichen ohne Bewegung befördert.

14. Vorrichtung nach Anspruch 11, wobei jede Öffnungseinrichtung wenigstens ein Schieberventil umfaßt.

15. Vorrichtung nach Anspruch 14, wobei jede Öffnungseinrichtung wenigstens zwei Schieberventile umfaßt.

16. Vorrichtung nach Anspruch 11, wobei die Druckreduziereinrichtung ein Nadelventil umfaßt.

17. Vorrichtung nach Anspruch 11, wobei die Transporteinrichtung eine Einrichtung zum Verteilen des Erzeugnisses auf der Fläche in einer Schicht mit einer Dicke von weniger als 50,8 mm (2 Inch) umfaßt.

18. Vorrichtung nach Anspruch 1, wobei die Einrichtung zur Aufrechterhaltung der Umgebung den Dampf mit einer Temperatur im Bereich von 100°C bis 180°C (215°F bis 350°F) einleitet.

19. Vorrichtung nach Anspruch 18, wobei die Einrichtung zur Aufrechterhaltung der Umgebung den Dampf mit einem Druck im Bereich von 0,03MN/m² bis 0,2MN/m² (5 PSIG bis 30 PSIG) einleitet.

20. Vorrichtung nach Anspruch 11, die des weiteren eine Einrichtung zum Erwärmen wenigstens eines äußeren Abschnitts der sterilisierten Kammer umfaßt, um Kondensation zu verringern.

21. Vorrichtung nach Anspruch 20, wobei die Erwärmungseinrichtung den äußeren Abschnitt der Sterilisierkammer auf eine Temperatur erwärmt, die über der Temperatur liegt, mit der der überhitzte Dampf in die Sterilisierkammer eingeleitet wird.

22. Vorrichtung nach Anspruch 11, die des weiteren eine Einrichtung zum Erwärmen der Einlaß- und der Auslaßkammer umfaßt, um Kondensation an dem Erzeugnis zu verringern.

23. Vorrichtung nach Anspruch 11, die des weiteren eine Einrichtung zum Unterdrucksetzen der Einlaßkammer mit einem erwärmten Gas umfaßt, um Kondensation an dem Erzeugnis zu verringern.

24. Vorrichtung nach Anspruch 11, die des weiteren eine Einrichtung zum Einleiten eines erwärmten Gases in die Auslaßkammer umfaßt, um das Erzeugnis aus der Auslaßkammer auszustoßen.

25. Vorrichtung nach Anspruch 11 zum Sterilisieren von fungiblen Lebensmittelerzeugnissen, die ein abgeschlossenes Gehäuseelement mit einer Sterilisierkammer darin umfaßt, ein Endlosband mit einer oberen und einer unteren Bandstrecke, die beabstandet sind, und das in der Sterilisierkammer angebracht ist und um beabstandete Trägerelemente herum verläuft, eine Einrichtung zum Bewegen des Bandes, eine Einlaßeinrichtung, die eine Einrichtung enthält, die eine Schleusenkammer bildet, die an dem Gehäuse an einer Stelle oberhalb der oberen Bandstrecke an ein Ende desselben angrenzend angeordnet ist, eine Auslaßeinrichtung, die eine Einrichtung enthält, die eine Schleusenkammer bildet, die an dem Gehäuse an einer Stelle unterhalb des gegenüberliegenden Endes der oberen Bandstrecke an einer Stelle zur Aufnahme von Erzeugnissen angeordnet ist, die von dem Bandende herunterfallen, wobei jede der Schleusenkammern eine erste Ventileinrichtung aufweist, mit der Verbindung zwischen der entsprechenden Schleusenkammer und der sterilisierten Kammer gesteuert werden kann, sowie eine zweite Ventileinrichtung, mit der Verbindung zwischen den entsprechenden Schleusenkammern und der Umgebungsatmosphäre gesteuert werden kann, eine Einrichtung zur Steuerung der Betätigung der ersten und der zweiten Ventileinrichtung, so daß die Sterilisierkammer während der Funktion der Sterilisiervorrichtung zu keinem Zeitpunkt der Umgebungsatmosphäre ausgesetzt ist, und eine zu der Auslaß-Schleusenkammer gehörende Einrichtung zum gesteuerten Ablassen des Drucks darin auf atmosphärischen Druck.

26. Vorrichtung nach Anspruch 25, wobei die zu der Auslaß-Schleusenkammer gehörende Einrichtung zum Ablassen des Drucks darin ein Nadelventil enthält.

27. Vorrichtung nach Anspruch 25, die eine Einrichtung zum Aufrechterhalten einer vorgegebenen Sterilisiertemperatur in der Sterilisierkammer im Bereich von 100°C bis 180°C (212°F bis 350°F) enthält.

28. Vorrichtung nach Anspruch 25, die eine Einrichtung zum Aufrechterhalten eines vorgegebenen Drucks in der Sterilisierkammer in einem Bereich von 0,03 MN/m² bis 0,2 MN/m² (5 PSIG bis 30 PSIG) enthält.

29. Vorrichtung nach Anspruch 25, wobei die Einrichtung zum Ablassen des Drucks in der Auslaß-Schleusenkammer den Druck darin auf 0,03 MN/m² (5 PSIG) abläßt, bevor die zweite dazu gehörende Ventileinrichtung Verbindung zwischen der zweiten Schleusenkammer und der Atmosphäre herstellt.

30. Vorrichtung nach Anspruch 25, wobei das Lebensmittelerzeugnis ein blättriges Kraut oder Gewürz ist.

31. Vorrichtung nach Anspruch 25, die eine Einrichtung in der Sterilisierkammer enthält, die die obere Strecke des Endlosbandes in einem muldenförmigen Zustand hält.

32. Vorrichtung nach Anspruch 25, die eine Einrichtung in der Sterilisierkammer zum relativ gleichmäßigen Verteilen des sterilisierten Erzeugnisses auf der oberen Strecke des Bandes enthält.

33. Verfahren nach Anspruch 1, wobei der Aufrechterhaltungs- und der Überführungsschritt zeitlich so gesteuert werden, daß das lose Würzerzeugnis dem überhitzten Dampf in der geschlossenen Kammer wenigstens 5 Sekunden und nicht mehr als 40 Sekunden ausgesetzt ist.

34. Verfahren nach Anspruch 1, wobei die vorgegebene Sterilisiertemperatur und der -druck, die in der geschlossenen Kammer hergestellt werden, gewährleisten, daß das lose Erzeugnis in der geschlossenen Kammer ohne eine wesentliche Zunahme des Feuchtigkeitsgehaltes sterilisiert wird.

35. Verfahren nach Anspruch 6, wobei in dem Erwärmungsschritt der äußere Abschnitt der Kammer auf eine Temperatur erwärmt wird, die 5,6-11,1°C (10-20°F) über der Temperatur des überhitzten Dampfes liegt, der in dem Erwärmungsschritt in die Kammer eingeleitet wird.

36. Verfahren nach Anspruch 1, wobei in dem Schritt zur Aufrechterhaltung das Erzeugnis in einer Schicht mit einer Dicke von weniger als 50,8 mm (2 Inch) gehalten wird.

37. Verfahren nach Anspruch 1, wobei das lose Würzerzeugnis aus Comino (comino) besteht.

38. Verfahren nach Anspruch 1, wobei das lose Würzerzeugnis aus Fenchelsamen besteht.

39. Verfahren nach Anspruch 1, wobei das lose Würzerzeugnis aus Piment besteht.

40. Verfahren nach Anspruch 1, wobei das lose Würzerzeugnis aus Anis besteht.

41. Verfahren nach Anspruch 1, wobei das lose Würzerzeugnis aus schwarzem Pfeffer besteht.

42. Verfahren nach Anspruch 1, wobei das lose Würzerzeugnis aus Zimt besteht.

43. Verfahren nach Anspruch 1, wobei das lose Würzerzeugnis aus Kurkuma besteht.

44. Verfahren nach Anspruch 1, wobei das lose Würzerzeugnis aus weißem Pfeffer besteht.

45. Verfahren nach Anspruch 1, wobei in dem Schritt zur Aufrechterhaltung das Erzeugnis in einer Schicht mit einer Dicke im Bereich von 25,4 bis 50,8 mm (1-2 Inch) auf der Auflagefläche gehalten wird.

## Revendications

1. Procédé de stérilisation d'épices et d'herbes à feuilles, comprenant :
l'établissement d'une chambre fermée ayant une tempéra ture et une pression prédéterminées de stérilisation, caractérisé par la disposition de vapeur d'eau surchauffée dans la chambre fermée,
l'introduction d'un produit aromatisant en vrac choisi dans le groupe formé essentiellement d'épices et d'herbes à feuilles, dans la chambre fermée par une chambre d'entrée sans exposition de la chambre fermée à l'atmosphère ambiante,
le transport du produit sous forme d'une couche sur une surface de support dans la chambre fermée vers un emplacement d'évacuation avec exposition du produit à la vapeur d'eau surchauffée dans la chambre fermée afin que la vapeur d'eau surchauffée stérilise le produit,
le transfert du produit de l'emplacement d'évacuation dans la chambre fermée a une chambre de sortie sans exposition de la chambre fermée à l'atmosphère ambiante, et
la relaxation de la pression dans la chambre de sortie à une fréquence choisie pour éviter l'émission de bouffées du produit sans exposition de la chambre fermée à l'atmosphère ambiante.

2. Procédé selon la revendication 1, dans lequel l'étape de transport comprend une étape de transport du produit sur une courroie sans fin vers l'emplacement d'évacuation.

3. Procédé selon la revendication 1, dans lequel l'étape de transport assure le transport du produit sans agitation.

4. Procédé selon la revendication 1, dans lequel l'étape d'établissement comprend une étape d'introduction de vapeur d'eau surchauffée à une température comprise entre 100 °C et 180 °C (215 et 350 °F) et à une pression comprise entre 0,03 et 0,2 MN/m² (5 à 30 psig) dans la chambre fermée.

5. Procédé selon la revendication 1, comprenant en outre une étape de chauffage de la partie externe au moins de la chambre fermée afin que la condensation soit réduite dans la chambre fermée.

6. Procédé selon la revendication 5, dans lequel l'étape de chauffage comprend le chauffage de la partie extérieure de la chambre à une température supérieure aux températures de la vapeur surchauffée introduite dans la chambre dans l'étape d'introduction.

7. Procédé selon la revendication 5, comprenant en outre une étape de chauffage des chambres d'entrée et de sortie pour la réduction de la condensation sur le produit.

8. Procédé selon la revendication 2, dans lequel l'étape de transport comprend le transport du produit sur la courroie sous forme d'une couche ayant une épaisseur inférieure à 50,8 mm (2 pouces)

9. Procédé selon la revendication 1, comprenant en outre une étape de mise sous pression du produit dans la chambre d'entrée avec un gaz chauffé de manière que la condensation sur le produit placé dans la chambre fermée soit réduite.

10. Procédé selon la revendication 1, comprenant en outre une étape d'introduction d'un gaz chauffé dans la chambre de sortie après l'étape de relaxation de pression afin que le produit soit éjecté de la chambre de sortie.

11. Appareil de stérilisation d'épices et d'herbes à feuilles, comprenant :
une chambre étanche de stérilisation, la chambre comprenant un dispositif de transport d'un produit aromatisant en vrac dans une couche formée sur une surface de support qui est disposée entre une position d'entrée et une position de sortie,
un dispositif destiné à maintenir une atmosphère de vapeur surchauffée ayant, dans la chambre de stérilisation, une pression et une température choisies de manière que la vapeur surchauffée stérilise le produit,
une chambre d'entrée fixée à la chambre de stérilisation et alignée sur la position d'entrée afin que le produit soit déposé à la surface de support dans la position d'entrée,
une chambre de sortie fixée à la chambre de stérilisation et alignée sur la position de sortie afin qu'elle reçoive le produit de la surface de support à la position de sortie,
chacune des chambres d'entrée et de sortie comprenant une chambre respective étanche et un dispositif d'ouverture en alternance de la chambre respective étanche vers la chambre de stérilisation et vers un espace respectif qui se trouve à l'extérieur de la chambre de stérilisation, et
un dispositif de réduction de la pression dans la chambre de sortie, à une vitesse suffisamment lente pour que le produit de la chambre de sortie ne forme pas de bouffées lorsque le dispositif respectif d'ouverture ouvre la chambre de sortie vers l'espace respectif.

12. Appareil selon la revendication 11, dans lequel la surface de support est formée par une courroie sans fin, et le dispositif de transport comporte un dispositif de déplacement de la courroie de manière que le produit soit transporté de la position d'entrée à la position de sortie.

13. Appareil selon la revendication 12, dans lequel la courroie est destinée à transporter le produit pratiquement sans agitation.

14. Appareil selon la revendication 11, dans lequel chaque dispositif d'ouverture comporte au moins une vanne à obturateur coulissant.

15. Appareil selon la revendication 14, dans lequel le dispositif d'ouverture comporte deux vannes à obturateur coulissant.

16. Appareil selon la revendication 11, dans lequel le dispositif de réduction de pression comporte une soupape à pointeau.

17. Appareil selon la revendication 11, dans lequel le dispositif de transport comporte un dispositif destiné à étaler le produit à la surface sous forme d'une couche ayant une épaisseur inférieure à 50,8 mm (2 pouces)

18. Appareil selon la revendication 11, dans lequel le dispositif destiné à maintenir une atmosphère introduit de la vapeur d'eau à une température comprise entre 100 °C et 180 °C (215 °F et 350 °F)

19. Appareil selon la revendication 18, dans lequel le dispositif destiné à maintenir une atmosphère introduit de la vapeur d'eau à une pression comprise entre 0,03 et 0,2 MN/m² (5 à 30 psig)

20. Appareil selon la revendication 11, comportant en outre un dispositif de chauffage au moins de la partie extérieure de la chambre de stérilisation afin que la condensation soit réduite.

21. Appareil selon la revendication 20, dans lequel le dispositif de chauffage chauffe la partie extérieure de la chambre de stérilisation à une température supérieure à la température à laquelle la vapeur d'eau surchauffée est introduite dans la chambre de stérilisation

22. Appareil selon la revendication 11, comprenant en outre un dispositif de chauffage des chambres d'entrée et de sortie de manière que la condensation sur le produit soit réduite.

23. Appareil selon la revendication 11, comprenant en outre un dispositif de mise sous pression des chambres d'entrée avec un gaz chauffé afin que la condensation soit réduite sur le produit.

24. Appareil selon la revendication 11, comprenant en outre un dispositif d'introduction d'un gaz chauffé dans la chambre de sortie afin que le produit soit éjecté de la chambre de sortie.

25. Appareil selon la revendication 11, destiné à la stérilisation de produits alimentaires fongueux, comprenant un organe formant un boîtier étanche ayant une chambre de stérilisation à l'intérieur, une courroie sans fin ayant des brins supérieur et inférieur distants montés dans la chambre de stérilisation et disposée autour d'organes espacés de support, un dispositif de déplacement de la courroie, un dispositif d'entrée comprenant un dispositif destiné à former une chambre de sas fixée au boîtier à un emplacement qui se trouve au-dessus du brin supérieur de la courroie près d'une extrémité de celle-ci, un dispositif de sortie comprenant un dispositif formant une chambre de sas fixée au boîtier à un emplacement qui se trouve au-dessous de l'extrémité opposée du brin supérieur de la courroie en position de réception de produit qui tombe de l'extrémité de la courroie, chacune des chambres de sas ayant une première vanne destinée à régler la communication entre la chambre respective de sas et la chambre de stérilisation et une seconde vanne destinée à régler la communication entre les chambres respectives de sas et l'atmosphère ambiante, un dispositif de commande du fonctionnement de la première et de la seconde vanne de manière que la chambre de stérilisation ne soit jamais exposée à l'atmosphère ambiante pendant le fonctionnement de l'appareil de stérilisation, et un dispositif associé à la chambre de sas de sortie et destiné à réduire la pression de manière réglable vers la pression atmosphérique.

26. Appareil selon la revendication 25, dans lequel le dispositif associé à la chambre de sas de sortie et destiné à réduire la pression dans cette chambre comporte une soupape à pointeau.

27. Appareil selon la revendication 25, comprenant un dispositif destiné à maintenir une température prédéterminée de stérilisation, dans la chambre des stérilisation, comprise entre 100 et 180 °C (212 et 350 °F)

28. Appareil selon la revendication 25, comprenant un dispositif de maintien d'une pression prédéterminée dans la chambre de stérilisation entre 0,03 et 0,2 MN/m² (5 à 30 psig).

29. Appareil selon la revendication 25, dans lequel le dispositif de réduction de la pression dans la chambre de sas de sortie réduit la pression dans cette chambre à une valeur de 0,03 MN/m² (5 psig) avant que la seconde vanne qui lui est associée ne fonctionne pour établir la communication entre la seconde chambre de sas et l'atmosphère.

30. Appareil selon la revendication 25, dans lequel le produit alimentaire est un épice ou une herbe en feuilles.

31. Appareil selon la revendication 25, comprenant un dispositif placé dans la chambre de stérilisation et destiné à maintenir le brin supérieur de la courroie sans fin à une configuration de rigole.

32. Appareil selon la revendication 25, comprenant un dispositif placé dans la chambre de stérilisation et destiné à distribuer uniformément le produit en cours de stérilisation sur le brin supérieur de la courroie.

33. Procédé selon la revendication 1, dans lequel les étapes de maintien et de transfert sont synchronisées de manière qu'elles provoquent le maintien de la masse du produit aromatisant exposé à de la vapeur d'eau surchauffée dans la chambre fermée pendant au moins 5 s et au plus 40 s.

34. Procédé selon la revendication 1, dans lequel la température et la pression prédéterminées de stérilisation établies dans la chambre fermée assurent la stérilisation du produit en vrac dans la chambre fermée sans augmentation notable de la teneur en humidité.

35. Procédé selon la revendication 6, dans lequel l'étape de chauffage chauffe la partie extérieure de la chambre à une température supérieure de 5,6 à 11,1 °C (10 à 20 °F) à la température de la vapeur d'eau surchauffée introduite dans la chambre dans l'étape de chauffage.

36. Procédé selon la revendication 1, dans lequel l'étape de maintien assure le maintien du produit sous forme d'une couche ayant une épaisseur inférieure à 50,8 mm (2 pouces).

37. Procédé selon la revendication 1, dans lequel le produit aromatisant en vrac est formé de cumin.

38. Procédé selon la revendication 1, dans lequel le produit aromatisant en vrac est formé de graines de fenouil.

39. Procédé selon la revendication 1, dans lequel le produit aromatisant en vrac est formé de piment.

40. Procédé selon la revendication 1, dans lequel le produit aromatisant en vrac est formé d'anis.

41. Procédé selon la revendication 1, dans lequel le produit aromatisant en vrac est formé de poivre noir.

42. Procédé selon la revendication 1, dans lequel le produit aromatisant en vrac est formé de cannelle.

43. Procédé selon la revendication 1, dans lequel le produit aromatisant en vrac est formé de curcuma.

44. Procédé selon la revendication 1, dans lequel le produit aromatisant en vrac est formé de poivre blanc.

45. Procédé selon la revendication 1, dans lequel l'étape de maintien assure le maintien du produit sous forme d'une couche ayant une épaisseur comprise entre 25,4 et 50,8 mm (1 à 2 pouces) sur la surface de support.
